# EUROPEAN PATENT APPLICATION

(11) **EP 4 787 495 A1**
(43) Date of publication of application: **05.08.2026**
(21) Application number: 26152809.5
(22) Date of filing: 20.01.2026
(51) Int. Cl.: H01M 4/58, H01M 4/62, H01M 4/66, H01M 4/75, H01M 10/052, H01M 10/0562

(54) **BATTERY**

(30) Priority: 31.01.2025 JP 2025015621
(71) Applicant: Toyota Jidosha Kabushiki Kaisha, Toyota-shi, Aichi-ken 471-8571 (JP)
(72) Inventor: Asakura, Ryo, Toyota- shi, Aichi-ken, 471-8571 (JP); Shiotani, Shinya, Toyota- shi, Aichi-ken, 471-8571 (JP); Ushiroda, Shin, Toyota- shi, Aichi-ken, 471-8571 (JP)
(74) Representative: Winter, Brandl - Partnerschaft mbB

(57) **Abstract**

Disclosed is a technique capable of suppressing delamination between the positive electrode current collector and the positive electrode active material layer in a battery using a sulfur-based positive electrode active material, even when the volume of the sulfur-based positive electrode active material changes due to charging and discharging. The battery of the present disclosure comprises a positive electrode current collector, a positive electrode active material layer, an electrolyte layer, and a negative electrode. The positive electrode active material layer comprises a sulfur-based active material. The positive electrode current collector has a contact surface in contact with the positive electrode active material layer. Arithmetic mean roughness of the contact surface is 0.25 µm or more.

## Description

### TECHNICAL FIELD

The present application discloses a battery.

### BACKGROUND ART

PTL 1 discloses a battery using a sulfur-based positive electrode active material.

### CITATION LIST

### PATENT LITERATURE

PTL 1 Japanese Unexamined Patent Publication (Kokai) No. 2022-158610

### SUMMARY

### TECHNICAL PROBLEM

Batteries using a sulfur-based positive electrode active material are susceptible to delamination between the positive electrode current collector and the positive electrode active material layer due to volumetric changes in the sulfur-based positive electrode active material during charging and discharging.

### SOLUTION TO PROBLEM

The present application discloses the following plurality of aspects as means for achieving the above object.

### <Aspect 1>

A battery, comprising a positive electrode current collector, a positive electrode active material layer, an electrolyte layer, and a negative electrode, wherein
the positive electrode active material layer comprises a sulfur-based active material,
the positive electrode current collector has a contact surface in contact with the positive electrode active material layer, and
arithmetic mean roughness of the contact surface is 0.25 µm or more.

### <Aspect 2>

The battery according to Aspect 1, wherein
the positive electrode current collector comprises Al.

### <Aspect 3>

The battery according to Aspect 1 or 2, wherein
the arithmetic mean roughness of the contact surface is 0.32 µm or more.

### <Aspect 4>

The battery according to any one of Aspects 1 to 3, wherein
the arithmetic mean roughness of the contact surface is 0.57 µm or less.

### <Aspect 5>

The battery according to any one of Aspects 1 to 4, wherein
the arithmetic mean roughness of the contact surface is more than 0.32 µm and less than 0.57 µm.

### <Aspect 6>

The battery according to any one of Aspects 1 to 5, wherein
the positive electrode active material layer comprises a P-containing sulfide and carbon.

### <Aspect 7>

The battery according to any one of Aspects 1 to 6, wherein
the electrolyte layer comprises a solid electrolyte.

### <Aspect 8>

The battery according to any one of Aspects 1 to 7, wherein
the negative electrode involves deposition of metallic lithium during charging, and involves dissolution of metallic lithium during discharging.

### ADVANTAGEOUS EFFECTS OF INVENTION

According to the technique of the present disclosure, a battery using a sulfur-based positive electrode active material is less susceptible to delamination between the positive electrode current collector and the positive electrode active material layer, even when the volume of the sulfur-based positive electrode active material changes due to charging and discharging.

### BRIEF DESCRIPTION OF DRAWINGS

FIG. 1 schematically shows one example of a configuration of the battery.
FIG. 2 is a SEM image of a cross-section of the cell according to Example 2, showing the state of the interface between a positive electrode active material layer and a positive electrode current collector.

### DESCRIPTION OF EMBODIMENTS

Hereinafter, one embodiment of the battery of the present disclosure will be described. However, the battery of the present disclosure is not limited to the embodiment described below.

### 1. Battery

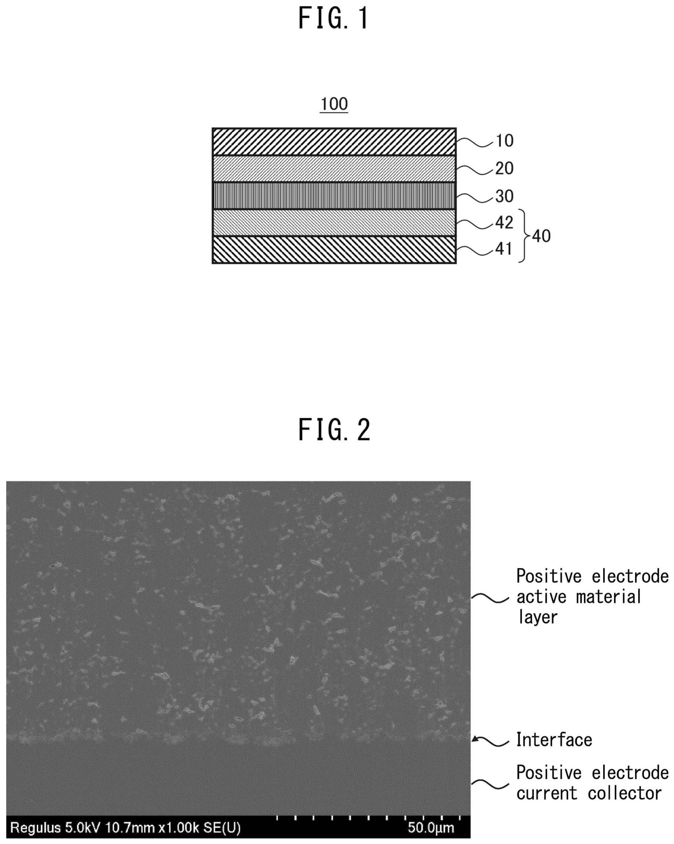

As shown in FIG. 1, the battery 100 according to one embodiment comprises a positive electrode current collector 10, a positive electrode active material layer 20, an electrolyte layer 30, and a negative electrode 40. The positive electrode active material layer 20 comprises a sulfur-based active material. The positive electrode current collector 10 has a contact surface 11 in contact with the positive electrode active material layer 20. The arithmetic mean roughness of the contact surface 11 is 0.25 µm or more.

### 1.1 Positive electrode current collector

As shown in FIG. 1, the battery 100 comprises a positive electrode current collector 10. The positive electrode current collector 10 has a contact surface 11 in contact with a positive electrode active material layer 20. In the positive electrode current collector 10, as long as the arithmetic mean roughness of the contact surface 11 is 0.25 µm or more, other features (such as constituent material, shape, and size of the positive electrode current collector 10) are not particularly limited. The positive electrode current collector 10, for example, may be foil-like or plate-like. The positive electrode current collector 10 may be a metal foil. Alternatively, the positive electrode current collector 10 may have a layer consisting of a resin composition comprising a resin and a conductive material. Alternatively, the positive electrode current collector 10 may comprise a combination of a metal foil and a layer consisting of a resin composition. The positive electrode current collector 10 may consist of a plurality of foils or sheets. Examples of metals constituting the foil for the positive electrode current collector 10 include at least one selected from Cu, Ni, Cr, Au, Pt, Ag, Al, Fe, Ti, Zn, Co, V, Mg, Pb, Ge, In, Sn, Zr, and stainless steel. Particularly, from the viewpoint of ensuring oxidation resistance, the positive electrode current collector 10 may comprise Al. As described below, when the positive electrode current collector 10 comprises Al, the surface of the positive electrode current collector 10 can be chemically dissolved to precisely control the surface roughness, which also has the advantage that the arithmetic mean roughness of the contact surface 11 is easily controlled within a predetermined range. The positive electrode current collector 10 may be a metal foil or a substrate plated or vapor-deposited with a metal described above. When the positive electrode current collector 10 consists of a plurality of metal foils, there may be some layer between the plurality of metal foils. The thickness of the positive electrode current collector 10 is not particularly limited. The thickness of the positive electrode current collector 10, for example, may be 1 µm or more or 1 mm or less.

The contact surface 11 of the positive electrode current collector 10 has an arithmetic mean roughness of 0.25 µm or more. When the contact surface 11 has such arithmetic mean roughness, the contact surface 11 and the positive electrode active material layer 20 are brought into close contact, and the positive electrode current collector 10 and the positive electrode active material layer 20 are less susceptible to delamination even when the volume of the sulfur-based active material changes due to charging and discharging. When the contact surface 11 has such arithmetic mean roughness, short-circuit resistance capacity of the battery is likely to increase. Since sulfur-based active materials are flexible, even if the size (particle size) of a sulfur-based active material is large, the sulfur-based active material can be deformed so as to conform to the unevenness of the contact surface 11 of the positive electrode current collector 10. According to the findings of the present inventors, regardless of the size of the sulfur-based active material, by having an arithmetic mean roughness of 0.25 µm or more for the contact surface 11, sufficient adhesion between the contact surface 11 and the positive electrode active material layer 20 is ensured. Particularly, when the arithmetic mean roughness of the contact surface 11 is 0.32 µm or more, delamination strength between the contact surface 11 and the positive electrode active material layer 20 is likely to further increase. If the arithmetic mean roughness of the contact surface 11 is excessively large, the unevenness of the contact surface 11 is excessively increased, and breakage (tip breakage) of protruding portions of the contact surface 11 may occur due to contact with the positive electrode active material layer 20 and volumetric changes of the positive electrode active material layer 20. Although the delamination strength between the positive electrode current collector 10 and the positive electrode active material layer 20 when the unevenness of the contact surface 11 is excessively large is greater than the delamination strength when the contact surface 11 is a smooth surface, the magnitude of increase is lowered. Excessively increasing the arithmetic mean roughness of the contact surface 11 is likely to result in a decrease in mechanical strength of the positive electrode current collector 10, and is likely to result in an increase in manufacturing cost of the positive electrode current collector 10. According to the findings of the present inventors, when the arithmetic mean roughness of the contact surface 11 is 0.57 µm or less, especially when the arithmetic mean roughness of the contact surface 11 is more than 0.32 µm and less than 0.57 µm, delamination strength between the positive electrode current collector 10 and the positive electrode active material layer 20 is likely to further increase, and short-circuit resistance capacity of the battery is likely to further increase. The arithmetic mean roughness of the contact surface 11 may be 0.35 µm or more and 0.55 µm or less, 0.37 µm or more and 0.53 µm or less, or 0.40 µm or more and 0.50 µm or less.

The arithmetic mean roughness of the contact surface 11 of the positive electrode current collector 10 may be adjusted by subjecting at least the portion of the surface of the positive electrode current collector 10 that forms the contact surface 11 to a roughening treatment. The roughening treatment includes chemical dissolution treatment (such as etching), mechanical processing treatment, plating treatment, and laser treatment. For example, when the positive electrode current collector 10 comprises Al, a portion of the surface of the positive electrode current collector 10 can be easily chemically dissolved. Surface unevenness is precisely controlled by dissolution time, and the arithmetic mean roughness of the contact surface 11 is easily controlled within a predetermined range. The form of surface unevenness of the contact surface 11 is not particularly limited. In one embodiment, the contact surface 11 of the positive electrode current collector 10 may be porous.

The arithmetic mean roughness of the contact surface 11 of the positive electrode current collector 10 does not substantially change between before forming the positive electrode active material layer 20 on the surface of the positive electrode current collector 10 and after being incorporated as a positive electrode into a battery 100. In this regard, for example, by extracting the positive electrode current collector 10 from the battery 100 and confirming the surface on the positive electrode active material layer 20 side of the surface of the positive electrode current collector 10, the arithmetic mean roughness of the contact surface 11 of the positive electrode current collector 10 can be measured. The arithmetic mean roughness of the contact surface 11 of the positive electrode current collector 10 is measured as described below. Specifically, the positive electrode is extracted from the battery, the positive electrode active material is delaminated from the positive electrode current collector, and the positive electrode mixture is removed from the surface of the positive electrode current collector to expose the contact surface of the positive electrode current collector. The exposed contact surface is measured for arithmetic mean roughness at any 10 locations contained within a measurement range of 2067 µm × 2757 µm using a non-contact surface profilometer (for example, a VK-X3000 laser microscope manufactured by Keyence Corporation), based on JIS B 0601:2013. The average value thereof is designated as "arithmetic mean roughness of exposed surface of positive electrode current collector".

### 1.2 Positive electrode active material layer

As shown in FIG. 1, the battery 100 comprises a positive electrode active material layer 20 in contact with a contact surface 11 that is at least a portion of the surface of the positive electrode current collector 10. The positive electrode active material layer 20 comprises a sulfur-based active material. The positive electrode active material layer 20 may comprise one or more of an additional active material, an electrolyte, a conductive material, and a binder, in addition to the sulfur-based active material. In one embodiment, the positive electrode active material layer 20 may comprise a sulfur-based active material, a P-containing sulfide, and carbon. When the positive electrode active material layer 20 comprises a P-containing sulfide, ion conductivity in the positive electrode active material layer 20 is likely to increase. Specifically, the P-containing sulfide can function as an electrolyte. When the positive electrode active material layer 20 comprises carbon, electronic conductivity of the positive electrode active material layer 20 is likely to increase. Specifically, carbon can function as a conductive material.

### 1.2.1 Sulfur-based active material

The sulfur-based active material needs only to be a material capable of reacting with Li ions, which are charge-compensating ions during discharging, to generate a compound comprising sulfur and lithium (for example, a sulfide such as Li₂S) as a discharge product and releasing Li ions during charging. The sulfur-based active material may comprise elemental sulfur, or may consist of elemental sulfur. Elemental sulfur may or may not be octasulfur (S₈). The octasulfur (S₈) may be a-sulfur, may be β-sulfur, may be γ-sulfur, or may be a combination thereof. The sulfur-based active material contained in the positive electrode active material layer 20 may be in solid solution with the P-containing sulfide described below, or may be chemically bonded to the P-containing sulfide. For example, the S in the sulfur-based active material may be chemically bonded with the S in the P-containing sulfide. The shape of the sulfur-based active material contained in the positive electrode active material layer 20 is not particularly limited, and for example, may be particulate. As described above, in the present embodiment, regardless of the size of the sulfur-based active material, by having an arithmetic mean roughness of 0.25 µm or more for the contact surface 11 of the positive electrode current collector 10, sufficient adhesion between the contact surface 11 and the positive electrode active material layer 20 is ensured. Whether the positive electrode active material layer 20 comprises a sulfur-based active material can be determined by carrying out various analyses, such as XAFS, XRD, and NMR, for the composite material constituting the positive electrode active material layer 20. For example, if the positive electrode active material layer 20 consists of a composite material comprising elemental sulfur, when an X-ray diffraction pattern, in which CuKα is used as the radiation source, is acquired for the composite material, diffraction peaks originating from elemental sulfur are identified in the X-ray diffraction pattern. The diffraction peaks originating from elemental sulfur typically appear at 20 = 23.05°±0.50°, 25.84°±0.50°, and 27.70°±0.50°. The amount of sulfur-based active material contained in the positive electrode active material layer 20 is not particularly limited, and needs only to be appropriately determined in accordance with target battery performance. In one embodiment, the content of the sulfur-based active material in the positive electrode active material layer 20 may be 10% by mass or more and 100% by mass or less, 20% by mass or more and 80% by mass or less, or 30% by mass or more and 60% by mass or less.

### 1.2.2 P-containing sulfide

The P-containing sulfide comprises at least P and S as constituent elements, and may further comprise an additional element M. Examples of the additional element M include one or more of Ge, Sn, Si, B, and Al. The P-containing sulfide may or may not comprise Li as a constituent element, in addition to P and S and optionally the element M. As described above, the P-containing sulfide may function as an electrolyte in the positive electrode active material layer 20 and improve Li-ion conductivity of the positive electrode active material layer 20. The P-containing sulfide may have an orthostructure of P element (PS₄ structure). The P-containing sulfide may comprise a sulfide as a compound of P and S (for example, P₂S₅). The shape of the P-containing sulfide contained in the positive electrode active material layer 20 is not particularly limited, and for example, may be particulate. Whether the positive electrode active material layer 20 comprises a P-containing sulfide can be determined by carrying out various analyses, such as XAFS, XRD, and NMR, for the composite material constituting the positive electrode active material layer 20. For example, if the positive electrode active material layer 20 consists of a composite material comprising P₂S₅, when an X-ray diffraction pattern, in which CuKα is used as the radiation source, is acquired for the composite material, diffraction peaks originating from P₂S₅ are identified in the X-ray diffraction pattern. The diffraction peaks originating from P₂S₅ typically appear at 20 = 25.84°±0.50°, 30.35°:1:0.50°, and 31.32°±0.50°. When the composite material is measured by XAFS, a peak originating from P₂S₅ is identified. If the P-containing sulfide contained in the composite material has an orthostructure (PS₄ structure), when the composite material is measured by XAFS, a peak originating from the orthostructure is identified. The amount of P-containing sulfide contained in the positive electrode active material layer 20 is not particularly limited, and needs only to be appropriately determined in accordance with target battery performance. In one embodiment, the content of the P-containing sulfide in the positive electrode active material layer 20 may be 0% by mass or more and 90% by mass or less, 20% by mass or more and 80% by mass or less, or 30% by mass or more and 60% by mass or less. The molar ratio (P/S) between P element and S element contained in the positive electrode active material layer 20 is not particularly limited, and for example, may be 0.03 or greater and 0.50 or less. The denominator of the molar ratio (P/S) refers to the total amount of S element contained in the positive electrode active material layer 20. In the case in which the positive electrode active material layer 20 comprises a sulfur-based active material, a P-containing sulfide, and the additional sulfide described below, since these materials all contain S element, the amounts of S element are summed to be used as the denominator of the molar ratio (P/S).

### 1.2.3 Carbon

Carbon, for example, is elemental carbon. Carbon may be one or more of carbon nanotube, vapor-grown carbon fiber (VGCF), acetylene black, furnace black, Ketjenblack, activated carbon, and graphite. Particularly, when the positive electrode active material layer 20 comprises carbon nanotube, high performance as a battery is likely to be ensured. The amount of carbon contained in the positive electrode active material layer 20 is not particularly limited, and needs only to be appropriately determined in accordance with target battery performance. In one embodiment, the content of carbon in the positive electrode active material layer 20 may be 0% by mass or more and 50% by mass or less, 5% by mass or more and 40% by mass or less, or 10% by mass or more and 30% by mass or less.

### 1.2.4 Additional components

The positive electrode active material layer 20 may optionally comprise additional active materials, additional sulfides, additional conductive materials, and binders, in addition to the components described above. The contents of the additional components in the positive electrode active material layer 20 are not particularly limited.

The additional active material, for example, may include various lithium-containing compounds. The lithium-containing compound may include various lithium-containing oxides such as lithium cobaltate, lithium nickelate, Li_{1±α}Ni_{1/3}CO_{1/3}Mn_{1/3}O_{2±δ}, lithium manganate, spinel-based lithium compounds (heteroelement-substituted Li-Mn spinels having a composition represented by Li₁₊ₓMn_{2-x-y}M_{y}O₄ (M is one or more selected from Al, Mg, Co, Fe, Ni, and Zn)), lithium titanate, and lithium metal phosphate (such as LiMPO₄; M is one or more selected from Fe, Mn, Co, and Ni). The higher the proportion of sulfur-based active material in the entire positive electrode active material, the more likely the expansion and contraction of the positive electrode active material layer 20 during charging and discharging increase, and the more likely the delamination between the positive electrode current collector 10 and the positive electrode active material layer 20 occurs. According to the present embodiment, by adjusting the arithmetic mean roughness of the contact surface 11 of the positive electrode current collector 10, as described above, such delamination is less likely to occur.

The additional sulfide, for example, may comprise at least an element M (M, for example, is one or more of Ge, Sn, Si, B, and Al) and S as constituent elements. The additional sulfide may contain an orthostructure of the element M. Examples of orthostructures of the element M include one or more of GeS₄-type structure, SnS₄-type structure, SiS₄-type structure, BS₃-type structure, and AlS₃-type structure. The additional sulfide may include sulfides (MₓS_{y}) as compounds of the elements M and S. The x and y are integers that impart electrical neutrality with S depending on M. Examples of MₓS_{y} include one or more of GeS₂, SnS₂, SiS₂, B₂S₃, and Al₂S₃.

The additional conductive material, for example, includes one or more conductive materials consisting of various metal materials. In one embodiment, the positive electrode active material layer 20 may comprise a conductive material other than carbon.

The binder, for example, may be one or more selected from butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, and polyimide (PI)-based binders.

### 1.3 Electrolyte layer

As shown in FIG. 1, the electrolyte layer 30 is arranged between the positive electrode active material layer 20 and the negative electrode 40. The electrolyte layer 30 comprises at least an electrolyte. The electrolyte layer 30 may be at least one of a solid electrolyte and a liquid electrolyte (electrolytic solution), and may further optionally comprise a binder. Particularly, when the electrolyte layer 30 comprises a solid electrolyte, higher performance is likely to be ensured. The electrolyte layer 30 may be a solid electrolyte layer free of a liquid electrolyte. According to the present technique, cracking of the solid electrolyte layer during charging and discharging of the battery is less likely to occur. Alternatively, the electrolyte layer 30 may have a separator for retaining a liquid electrolyte and preventing contact between the positive electrode active material layer 20 and the negative electrode 40. The thickness of the electrolyte layer 30 is not particularly limited, and for example, may be 0.1 µm or more or 1 µm or more, and may be 2 mm or less or 1 mm or less. The electrolyte layer 30 may consist of one layer, or may consist of a plurality of layers. For example, the electrolyte layer 30 may comprise a first layer arranged on the positive electrode active material layer 20 side and a second layer arranged on the negative electrode 40 side, and may be an electrolyte layer in which the first layer comprises a first electrolyte, and the second layer comprises a second electrolyte. The first electrolyte and the second electrolyte may be of different types from one another. The first electrolyte and the second electrolyte may each be at least one selected from oxide solid electrolytes, sulfide solid electrolytes, and solid electrolytes having ion-binding properties. For example, the first layer may comprise a solid electrolyte having ion-binding properties, and the second layer may comprise at least one of a solid electrolyte having ion-binding properties and a sulfide solid electrolyte.

### 1.3.1 Solid electrolyte

The solid electrolyte may be an inorganic solid electrolyte or an organic polymer electrolyte. Particularly, an inorganic solid electrolyte exhibits excellent ion conductivity and heat resistance. Examples of the inorganic solid electrolyte include oxide solid electrolytes, sulfide solid electrolytes, and inorganic solid electrolytes having ion-binding properties. Among inorganic solid electrolytes, sulfide solid electrolytes, especially sulfide solid electrolytes comprising at least Li, S, and P as constituent elements, have high performance. Alternatively, among inorganic solid electrolytes, solid electrolytes having ion-binding properties, especially solid electrolytes comprising at least Li, Y, and a halogen (at least one of Cl, Br, I, and F) as constituent elements, have high performance. The solid electrolyte may be amorphous, or may be crystalline. The solid electrolyte may be particulate. The average particle size (D50) of the solid electrolyte, for example, may be 10 nm or more and 10 µm or less.

The oxide solid electrolyte may be one or more selected from lithium lanthanum zirconate, LiPON, Li₁₊ₓAlₓGe₂₋ₓ(PO₄)₃, Li-SiO-based glass, and Li-Al-S-O-based glass. When an oxide solid electrolyte and a liquid electrolyte are combined, ion conductivity can be improved.

The sulfide solid electrolyte may be a glass-based sulfide solid electrolyte (sulfide glass), may be a glass-ceramic-based sulfide solid electrolyte, or may be a crystal-based sulfide solid electrolyte. The sulfide glass is amorphous. The sulfide glass may have a glass transition temperature (Tg). When the sulfide solid electrolyte has a crystal phase, examples of the crystal phase include Thio-LISICON-type crystal phase, LGPS-type crystal phase, and argyrodite-type crystal phase. The sulfide solid electrolyte may be particulate. The average particle size (D50) of the sulfide solid electrolyte, for example, may be 10 nm or more and 100 µm or less.

The sulfide solid electrolyte, for example, may contain Li element, an X element (X is at least one of P, As, Sb, Si, Ge, Sn, B, Al, Ga, and In), and S element. The sulfide solid electrolyte may further contain at least one of O element and a halogen element. The sulfide solid electrolyte may contain S element as an anionic element main component.

The sulfide solid electrolyte, for example, may be at least one selected from Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₃-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is any of Ge, Zn, and Ga), Li₂S-GeS₂, Li₂S-SiS₂-Li₃PO₄, and Li₂S-SiS₂-LiₓMO_{y} (where x and y are positive numbers, and M is any of P, Si, Ge, B, Al, Ga, and In).

The composition of the sulfide solid electrolyte is not particularly limited. Examples thereof include xLi₂S·(100 - x)P₂S₅ (70 ≤ x ≤ 80) and yLiI·zLiBr·(100 - y - z)(xLi₂S·(1 - x)P₂S₅) (0.7 ≤ x ≤ 0.8, 0 ≤ y ≤ 30, and 0 ≤ z ≤ 30). Alternatively, the sulfide solid electrolyte may have a composition represented by general formula: Li₄₋ₓGe₁₋ₓPₓS₄ (0 < x < 1). In the above general formula, at least a portion of Ge may be substituted with at least one of Sb, Si, Sn, B, Al, Ga, In, Ti, Zr, V, and Nb. In the above general formula, at least a portion of P may be substituted with at least one of Sb, Si, Sn, B, Al, Ga, In, Ti, Zr, V, and Nb. In the above general formula, a portion of Li may be substituted with at least one of Na, K, Mg, Ca, and Zn. In the above general formula, a portion of S may be substituted with a halogen (at least one of F, Cl, Br, and I). Alternatively, the sulfide solid electrolyte may have a composition represented by Li₇₋ₐPS₆₋ₐXₐ (X is at least one of Cl, Br, and I, and a is a number of 0 or greater and 2 or less). a may be 0, or may be greater than 0. In the latter case, a may be 0.1 or greater, may be 0.5 or greater, or may be 1 or greater. In addition, a may be 1.8 or less, or may be 1.5 or less.

The solid electrolyte having ion-binding properties, for example, may comprise at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm. These elements can generate cations in water. The ion-binding solid electrolyte material, for example, may comprise at least one halogen element selected from the group consisting of Cl, Br, I, and F. These elements can generate anions in water. The solid electrolyte having ion-binding properties may comprise at least one selected from the group consisting of Gd, Ca, Zr, and Y, at least one selected from the group consisting of Cl, Br, I, and F, and Li. The solid electrolyte having ion-binding properties comprises Li and Y, and may comprise at least one selected from the group consisting of Cl, Br, I, and F. More specifically, the solid electrolyte having ion-binding properties may comprise Li, Y, Cl, and Br, may comprise Li, Ca, Y, Gd, Cl, and Br, or may comprise Li, Zr, Y, and Cl. Even more specifically, the solid electrolyte having ion-binding properties may be at least one of Li₃YBr₂Cl₄, Li_{2.8}Ca_{0.1}Y_{0.5}Gd_{0.5}Br₂Cl₄, and Li_{2.5}Y_{0.5}Zr_{0.5}Cl₆.

The solid electrolyte having ion-binding properties may be a halide solid electrolyte. A halide solid electrolyte exhibits excellent ion conductivity. The halide solid electrolyte may have a composition represented by, for example, formula (A):

Li_{α}M_{β}X_{γ} ... (A)

where α, β, and γ are each independently a value greater than 0, M is at least one selected from the group consisting of metal elements other than Li and semimetal elements, and X is at least one selected from the group consisting of Cl, Br, and I. Note that a "semimetal element" may be at least one selected from the group consisting of B, Si, Ge, As, Sb, and Te. Further, a "metal element" may include (i) all of the elements contained from Group 1 to Group 12 of the periodic table (excluding hydrogen) and (ii) all of the elements contained from Group 13 to Group 16 of the periodic table (excluding B, Si, Ge, As, Sb, Te, C, N, P, O, S, and Se). A metal element can form an inorganic compound with halide ions and form cations.

In the formula (A), M may comprise Y (i.e., yttrium). A halide solid electrolyte comprising Y may have a composition represented by LiₐMe_{b}Y_{c}X₆ (where a + mb + 3c = 6, c > 0, Me is at least one selected from the group consisting of metal elements and semimetal elements other than Li and Y, and m is the valence of Me). Me, for example, may be at least one selected from the group consisting of Mg, Ca, Sr, Ba, Zn, Sc, Al, Ga, Bi, Zr, Hf, Ti, Sn, Ta, and Nb.

The halide solid electrolyte may have a composition represented by formula (A1): Li_{6-3d}Y_{d}X₆. In the formula (A1), X is one or more elements selected from the group consisting of Cl, Br, and I. d may satisfy 0 < d < 2, or may be d = 1. The halide solid electrolyte may have a composition represented by formula (A2): Li_{3.3δ}Y_{1+δ}Cl₆. In the formula (A2), δ may be 0 < δ ≤ 0.15. The halide solid electrolyte may have a composition represented by formula (A3): Li₃₋₃₆Y_{1+δ}Br₆. In the formula (A3), δ may be 0 < δ ≤ 0.25. The halide solid electrolyte may have a composition represented by formula (A4): Li_{3-3δ+a}Y_{1+δ-a}MeₐCl_{6-x-y}BrₓI_{y}. In the formula (A4), Me may be at least one selected from the group consisting of Mg, Ca, Sr, Ba, and Zn. In the formula (A4), for example, -1 < δ < 2, 0 < a < 3, 0 < (3 - 3δ + a), 0 < (1 + δ - a), 0 ≤ x ≤ 6, 0 ≤ y ≤ 6, and (x + y) ≤ 6 are satisfied. The halide solid electrolyte may have a composition represented by formula (A5): Li_{3-3δ}Y_{1+δ-a}MeₐCl_{6-x-y}BrₓI_{y}. In the formula (A5), Me may be at least one selected from the group consisting of Al, Sc, Ga, and Bi. In the formula (A5), the variables may satisfy -1 < δ < 1, 0 < a < 2, 0 < (1 + δ - a), 0 ≤ x ≤ 6, 0 ≤ y ≤ 6, and (x + y) ≤ 6. The halide solid electrolyte may have a composition represented by formula (A6): Li_{3-3δ-a}Y_{1+δ-a}MeₐCl_{6-x-y}BrₓI_{y}. In the formula (A6), Me may be at least one selected from the group consisting of Zr, Hf, and Ti. In the formula (A6), the variables may satisfy -1 < δ < 1,0 < a < 1.5, 0 < (3 - 3δ - a), 0 < (1 + δ - a), 0 ≤ x ≤ 6, 0 ≤ y ≤ 6, and (x + y) ≤ 6. The halide solid electrolyte may have a composition represented by formula (A7): Li_{3-3δ-2a}Y_{1+δ-a}MeₐCl_{6-x-y}BrₓI_{y}. In the formula (A7), Me may be at least one selected from the group consisting of Ta and Nb. In the formula (A7), the variables may satisfy -1 < δ < 1, 0 < a < 1.2, 0 < (3 - 3δ - 2a), 0 < (1 + δ - a), 0 ≤ x ≤ 6, 0 ≤ y ≤ 6, and (x + y) ≤ 6.

The solid electrolyte having ion-binding properties may be a complex hydride solid electrolyte. The complex hydride solid electrolyte can be composed of Li ions and complex ions comprising H. The complex ion comprising H, for example, may comprise an element M comprising at least one of nonmetal elements, semimetal elements, and metal elements and H bonded to the element M. In the complex ion comprising H, an element M as a central element and H surrounding the element M may be bonded to each other via a covalent bond. The complex ion comprising H may be represented by (MₘHₙ)^{α-}. In this case, m can be any positive number, and n and α can take on any positive number depending on m and the valence of the element M. The element M needs only to be any nonmetal element or metal element that can form a complex ion. For example, the element M may comprise at least one of B, C, and N as a nonmetal element, or may comprise B. Further, for example, the element M may comprise at least one of Al, Ni, and Fe as a metal element. Particularly, when the complex ion comprises B or comprises C and B, higher ion conductivity is likely to be ensured. Specific examples of the complex ion comprising H include (CB₉H₁₀)⁻, (CB₁₁H₁₂)⁻, (B₁₀H₁₀)²⁻, (B₁₂H₁₂)²⁻, (BH₄)⁻, (NH₂)⁻, (AlH₄)⁻, and combinations thereof. Particularly, when (CB₉H₁₀)⁻, (CB₁₁H₁₂)⁻, or a combination thereof is used, higher ion conductivity is likely to be ensured. Specifically, the complex hydride solid electrolyte may comprise Li, C, B, and H.

1.3.2 Liquid electrolyte

The liquid electrolyte (electrolytic solution) is a liquid comprising lithium ions as carrier ions. The electrolytic solution may be a water-based electrolytic solution or a non-water-based electrolytic solution. The composition of the electrolytic solution needs only to be the same as any known electrolytic solution for lithium-ion batteries. The electrolytic solution may be water or a non-water-based solvent in which a lithium salt is dissolved. Examples of the non-water-based solvent include various carbonate-based solvents. Examples of the lithium salt include lithium amide salts and LiPF₆. The separator for retaining a liquid electrolyte needs only to be a commonly used separator in batteries, and examples include those made of resins such as polyethylene (PE), polypropylene (PP), polyester, and polyamide. The separator may have a single-layer structure, or may have a multilayer structure. Examples of separators having a multilayer structure can include separators having a PE/PP two-layer structure and separators having a PP/PE/PP or PE/PP/PE three-layer structure. The separator may consist of a nonwoven fabric such as cellulose nonwoven fabric, resin nonwoven fabric, or glass-fiber nonwoven fabric.

### 1.3.3 Additional components

The binder that can be contained in the electrolyte layer 30 needs only to be appropriately selected from among ones exemplified as a binder that can be contained in the positive electrode active material layer 20 described above. The binder may be of one type used alone, or may be of two or more types used in combination. The electrolyte layer 30 may comprise various additives.

### 1.4 Negative electrode

As shown in FIG. 1, the battery 100 comprises a negative electrode 40. The negative electrode 40, for example, may comprise a negative electrode current collector 41 and a negative electrode active material layer 42 in contact with the negative electrode current collector 41. In one embodiment, the negative electrode 40 may involve deposition of metallic lithium during charging, and may involve dissolution of metallic lithium during discharging. In this case, metallic lithium is regarded as constituting the negative electrode active material layer 42. In this case, for the purpose of uniformizing the deposition and dissolution of metallic lithium, an intermediate layer may be present between the electrolyte layer 30 and the negative electrode 40.

### 1.4.1 Negative electrode current collector

For the negative electrode current collector 41, any material that can function as a negative electrode current collector for batteries can be adopted. The negative electrode current collector 41 may be a metal foil or a metal mesh, and alternatively, may be a carbon sheet. Particularly, a metal foil has excellent handleability. The negative electrode current collector 41 may consist of a plurality of foils or sheets. Metals constituting the metal foil as the negative electrode current collector 41 include at least one selected from Cu, Ni, Cr, Au, Pt, Ag, Al, Fe, Ti, Zn, Co, and stainless steel. Particularly, from the viewpoint of ensuring reduction resistance and the viewpoint of being less susceptible to alloying with lithium, the negative electrode current collector 41 may comprise at least one metal selected from Cu, Ni, and stainless steel, and preferably comprises at least one of Ni and stainless steel. The negative electrode current collector 41 may have on the surface thereof some coating layer. For example, the negative electrode current collector 41 may have on the surface thereof some protective layer. In one embodiment, the negative electrode current collector 41 may comprise a conductive material selected from the above metal foil, metal mesh, and carbon sheet, and a protective layer formed on the surface of the conductive material. The protective layer, for example, may comprise Mg. It is considered that due to the negative electrode current collector 41 having a protective layer comprising Mg, diffusion of Li on the surface of the negative electrode current collector 41 is promoted, affinity of metallic lithium for the negative electrode current collector 41 is increased, gaps between negative electrode current collector 41 and metallic lithium are suppressed, and metallic lithium is more uniformly deposited on the surface of the negative electrode current collector 41. When the negative electrode current collector 41 consists of a plurality of metal foils, there may be some layer between the plurality of metal foils. The thickness of the negative electrode current collector 41 is not particularly limited, and for example, may be 0.1 µm or more or 1 µm or more, and may be 1 mm or less or 100 µm or less.

### 1.4.2 Negative electrode active material layer

The negative electrode active material layer 42 involves deposition and dissolution of metallic lithium, as described above. Specifically, the battery 100 may be configured so that metallic lithium undergoes deposition between the electrolyte layer 30 and the negative electrode current collector 41 during charging, and the metallic lithium between the electrolyte layer 30 and the negative electrode current collector 41 undergoes dissolution (ionization) during discharging so as to return to the positive electrode. "Metallic lithium" in this case is a concept that includes elemental lithium and lithium alloys. Specifically, in the battery 100, metallic lithium may be deposited as elemental lithium, or may be deposited as an alloy with another metal. Examples of lithium alloys include Li-Mg, Li-Sn, Li-Al, Li-B, Li-C, Li-Si, Li-Ca, Li-Ga, Li-Ge, Li-As, Li-Se, Li-Ru, Li-Rh, Li-Pd, Li-Ag, Li-Au, Li-Cd, Li-In, Li-Sb, Li-Ir, Li-Pt, Li-Hg, Li-Pb, Li-Bi, Li-Zn, Li-Tl, Li-Te, and Li-At. The lithium alloy may be of one type, or may be of two or more types. The deposition amount of metallic lithium between the electrolyte layer 30 and the negative electrode current collector 41 is not particularly limited, and needs only to be appropriately adjusted in accordance with target battery performance. However, if the amount of metallic lithium deposited is excessively large, there are concerns such as concentration of pressure. In this regard, the deposition amount of metallic lithium, as a guideline, may be an amount so that the charge capacity of the battery 100, for example, is 1 mAh/cm² or more and 5 mAh/cm² or less.

The negative electrode active material layer 42 comprises a negative electrode active material, and may optionally comprise an electrolyte, a conductive aid, a binder, and various additives. The content of each component in the negative electrode active material layer 42 needs only to be appropriately determined in accordance with target battery performance. For example, when the entire solid content contained in the negative electrode active material layer 42 is 100% by mass, the content of the negative electrode active material may be 40% by mass or more, 50% by mass or more, 60% by mass or more, or 70% by mass or more, and may be 100% by mass or less, less than 100% by mass, 95% by mass or less, or 90% by mass or less. In this case, the shape of the negative electrode active material layer 42 is not particularly limited, and for example, may be a sheet having a substantially flat surface. The thickness of the negative electrode active material layer 42 in this case is not particularly limited, and for example, may be 0.1 µm or more, 1 µm or more, 10 µm or more, or 30 µm or more, and may be 2 mm or less, 1 mm or less, 500 µm or less, or 100 µm or less. For the negative electrode active material, any material known as a negative electrode active material for batteries can be adopted. For example, silicon-based active materials such as Si, Si alloys, and silicon oxides; carbon-based active materials such as graphite and hard carbon; various oxide-based active materials such as lithium titanate; and metallic lithium and lithium alloys described above can be adopted. The negative electrode active material may be of one type used alone, or may be of two or more types used in combination. The shape of the negative electrode active material needs only to be any general shapes of negative electrode active materials of batteries. For example, the negative electrode active material may be particulate. The negative electrode active material particles may be primary particles, or may be secondary particles of a plurality of agglomerated primary particles. The average particle diameter (D50) of the negative electrode active material particles, for example, may be 1 nm or more, 5 nm or more, or 10 nm or more, and may be 500 µm or less, 100 µm or less, 50 µm or less, or 30 µm or less. Alternatively, the negative electrode active material may be a foil-like or membranous lithium foil, as described above. Specifically, the negative electrode active material layer 42 may consist of a sheet of negative electrode active material. The electrolyte that can be contained in the negative electrode active material layer 42, for example, includes the solid electrolytes and electrolytic solutions described above, and combinations thereof. The conductive material that can be contained in the negative electrode active material layer 42, for example, needs only to be appropriately selected from among ones exemplified as a conductive material that can be contained in the positive electrode active material layer 20 described above. The binder that can be contained in the negative electrode active material layer 42, for example, needs only to be appropriately selected from among one exemplified as a binder that can be contained in the positive electrode active material layer 20 described above. The electrolyte, the conductive aid, and the binder may each be of one type used alone, or may be of two or more types used in combination.

### 1.5 Additional configurations

The battery 100 may be provided with any general configuration as a battery, for example, tabs or terminals, in addition to the above configurations. The above configurations of the battery 100 may each be housed inside an outer packaging. Any known outer packaging can be adopted as an outer packaging of the battery. In addition, a plurality of batteries 100 may be optionally connected electrically and optionally stacked to form a battery pack. In this case, the battery pack may be housed inside a known battery case. Examples of shapes of the battery 100 can include coin type, laminate type, cylindrical type, and square type. The battery 100 may comprise a restraining member for restraining each of the above configurations in the thickness direction. The restraining pressure applied by the restraining member is likely to lower internal resistance of the battery. The restraining pressure by the restraining member is not particularly limited. The restraining pressure by the restraining member may be 5 MPa or less, 3 MPa or less, or 1 MPa or less. The battery 100 may be a secondary battery. The battery 100 may be a lithium-sulfur battery (LiS battery). The battery 100 may be an all-solid battery substantially free of a liquid electrolyte. The battery 100 may be an all-solid lithium-sulfur battery.

### 2. Method for manufacturing battery

The battery 100, except that the above positive electrode current collector 10 and positive electrode active material layer 20 are combined, can be manufactured by applying any known method. The method for manufacturing a battery 100 according to one embodiment may comprise
S1: preparing a positive electrode current collector 10, wherein the positive electrode current collector 10 has a contact surface 11 in contact with a positive electrode active material layer 20 in a subsequent step, and arithmetic mean roughness of the contact surface 11 is 0.25 µm or more;
S2: forming a positive electrode active material layer 20 on the contact surface 11 of the positive electrode current collector 10 to obtain a positive electrode, wherein the positive electrode active material layer 20 comprises a sulfur-based active material;
S3: obtaining a laminated body comprising, in the order of, the positive electrode current collector 10, the positive electrode active material layer 20, an electrolyte layer 30, and a negative electrode 40; and
S4: housing the laminated body in an outer packaging.

In one embodiment, the battery 100, for example, can be manufactured as follows. However, the method for manufacturing a battery 100 is not limited to the following method, and each layer may be formed by, for example, dry molding.
(1) A metal foil is subjected to roughening treatment so that the arithmetic mean roughness of the surface of the metal foil (for example, Al foil) as a positive electrode current collector is 0.25 µm or more. Specific examples of roughening treatment are as described above.
(2) A sulfur-based active material constituting a positive electrode active material layer is dispersed in a solvent to obtain a positive electrode layer slurry. The solvent used in this case is not particularly limited, and various organic solvents can be used. The roughened surface (contact surface) of the positive electrode current collector is coated with the positive electrode layer slurry using a doctor blade, followed by drying, whereby a positive electrode active material layer is formed on the roughened surface (contact surface) of the positive electrode current collector to obtain a positive electrode.
(3) A metallic lithium foil as a negative electrode active material is prepared and combined with a negative electrode current collector to obtain a negative electrode. Alternatively, a negative electrode active material constituting a negative electrode active material layer is dispersed in a solvent to obtain a negative electrode layer slurry. The solvent used in this case is not particularly limited, and water and various organic solvents can be used. The surface of the negative electrode current collector is coated with the negative electrode layer slurry using a doctor blade, followed by drying, whereby a negative electrode active material layer is formed on the surface of the negative electrode current collector to obtain a negative electrode.
(4) Layers are laminated so that an electrolyte layer (solid electrolyte layer or separator) is interposed between the negative electrode and the positive electrode to obtain a laminated body comprising, in the order of, a negative electrode current collector, a negative electrode active material layer, an electrolyte layer, a positive electrode active material layer, and a positive electrode current collector. Additional members such as terminals are attached to the laminated body, as necessary.
(5) The laminated body is housed in a battery case. In the case of an electrolytic solution battery, the battery case is filled with an electrolytic solution. The laminated body is immersed in the electrolytic solution, and the laminated body is sealed in the battery case, whereby a battery is obtained.

### 3. Vehicle

As described above, the battery of the present disclosure exhibits excellent contact between the positive electrode current collector and the positive electrode active material layer and has high short-circuit resistance capacity. Such a battery, for example, can be suitably used in at least one type of vehicle selected from hybrid vehicle (HEV), plug-in hybrid vehicle (PHEV), and electric vehicle (BEV). Specifically, the technique of the present disclosure relates to a vehicle comprising a battery, wherein the battery comprises a positive electrode active material layer, an electrolyte layer, and a negative electrode; the positive electrode active material layer comprises a sulfur-based active material; the positive electrode current collector has a contact surface in contact with the positive electrode active material layer; and the arithmetic mean roughness of the contact surface is 0.25 µm or more. Each configuration of the battery is as described above.

### EXAMPLES

From the foregoing, one embodiment of the battery has been described. However, the technique of the present disclosure can be modified in various ways other than the above embodiment in ranges that does not depart from the spirit of the invention. Hereinafter, the technique of the present disclosure will be further described with reference to the Examples. However, the technique of the present disclosure is not limited to the following Examples.

### 1. Production of laminate cell

### 1.1 Preparation of positive electrode current collector

As the positive electrode current collector, a smooth Al foil that had not been subjected to roughening treatment and a roughened Al foil having the surface roughness thereof adjusted by roughening treatment were prepared. The roughening treatment was carried out by chemically dissolving the surface of an Al foil. By controlling the dissolution conditions, three types of roughened Al foils differing in surface roughness were prepared. The arithmetic mean roughness of the surface of the smooth Al foil was 0.21 µm. The arithmetic mean roughnesses of the surfaces of the three types of roughened Al foils were 0.32 µm, 0.46 µm, and 0.57 µm, respectively. The measurement method of arithmetic mean roughness is as described in the embodiments of the present specification.

### 1.2 Production of positive electrode

Elemental sulfur (80°C vacuum-dried product) as a sulfur-based active material, P₂S₅ as a P-containing sulfide, and single-walled carbon nanotube (120°C vacuum-dried product) as a conductive material were weighed so as to obtain a mass ratio of elemental sulfur : P₂S₅ : single-walled carbon nanotube = 42:35:23, and mixed in a mortar to obtain a mixture. 1.7 g of the mixture and 80 g of φ4-mm zirconia balls were added per ball mill pot, and mixed by a planetary ball mill at 400 rpm for a total of 36 h. After mixing by planetary ball mill, the mixture was dry-classified using a 38-µm sieve to obtain a positive electrode mixture. The positive electrode mixture and styrene-butadiene rubber (SBR) as a binder were weighed so as to obtain a mass ratio of positive electrode mixture : binder = 99.7:0.3, and dispersed in mesitylene as a solvent to produce a positive electrode slurry. The surfaces of the above smooth Al foil and roughened Al foils were coated with the positive electrode slurry, with a coating gap of 220 µm, followed by pre-drying at 50°C, and a main drying at 100°C for 30 min to obtain a laminated body of the positive electrode current collector and the positive electrode active material layer. The obtained laminated body was punched out to φ11.28 mm to obtain a positive electrode for evaluation.

### 1.3 Production of electrolyte layer

A sulfide solid electrolyte and amine-modified hydrogenated butadiene rubber (BR) as a binder were weighed so as to obtain a mass ratio of sulfide solid electrolyte : binder = 90.9:9.1, and dispersed in heptane as a solvent to produce a solid electrolyte slurry. A release film was coated thereon with the solid electrolyte slurry with a coating gap of 450 µm, followed by pre-drying at room temperature for 3 h, and main drying at 165°C for 1 h to obtain a laminated body of the release film and a solid electrolyte layer. The obtained laminated body was punched out to two sheets of φ14.5 mm, and the coated surfaces were stacked together and pressed at 6 t at room temperature. After pressing, the release film was peeled off to obtain a self-supporting sulfide solid electrolyte layer.

### 1.4 Production of negative electrode

A Li-Mg alloy foil was punched out to φ13 mm, a Ni foil as a negative electrode current collector was punched out to φ14.5 mm, and the Li-Mg alloy foil and the Ni foil were bonded by pressing at 0.1 t to obtain a negative electrode.

### 1.5 Lamination and battery assembly

The above solid electrolyte layer was arranged between the positive electrode and the negative electrode to obtain a laminated body comprising, in the order of, an Al foil as a positive electrode current collector, a positive electrode active material layer, a sulfide solid electrolyte layer, a Li-Mg alloy layer as a negative electrode active material layer, and a Ni foil as a negative electrode current collector. An Al tab as a positive electrode tab and a Ni tab as a negative electrode tab were each attached to the laminated body, and the laminated body was vacuum-sealed into a laminate film. The sealed cell was isostatically pressed at 300 MPa using a CIP (cold isostatic press) to produce a laminate cell for evaluation.

### 2. Delamination strength measurement

For the positive electrode produced as described above, delamination strength between the positive electrode current collector and the positive electrode active material was measured by the following procedure. As the measuring apparatus, an RZE force gauge and a motorized stand manufactured by Aikoh Engineering Co., Ltd. were used.
(1) The positive electrode was punched out to φ11.28 mm and pressed at 6 tons.
(2) Double-sided tape was set between each of one surface and the other surface of the positive electrode and the measuring apparatus.
(3) The positive electrode sandwiched between the double-sided tapes was pressed with respect to the measuring apparatus at 60 N.
(4) The force application direction of the measuring apparatus was switched from a pressure-bonding direction to a delaminating direction, and the strength when delamination occurred between the positive electrode current collector and the positive electrode active material was measured.

### 3. Electrochemical measurement

For the laminate cell produced as described above, a constant-current charge/discharge test was carried out at 60°C in a cutoff voltage range of 3.1 V to 1.2 V and, based on 1 C = 5.84 mA/cm², at a current density of 0.584 mA/cm² (equivalent to 0.1 C), using the following protocol. The "short-circuit resistance capacity" of the laminate cell was then measured.
·The laminate cell, after discharging and reaching a specified capacity, was transitioned to a charging step.
·The laminate cell, after reaching the specified capacity (cutoff upper limit voltage: 3.1 V) in the charging step, was transitioned to a subsequent discharging step.
·From 1.0 mAh/cm², the specified capacity was increased by 1.0 mAh/cm² per cycle, and the discharging and charging steps were repeated. The specified capacity in the cycle that was one cycle prior to the short-circuiting cycle was evaluated as "short-circuit resistance capacity".

### 4. Evaluation results

Evaluation results are shown in Table 1 below.

**TABLE 1**

| | Type of positive electrode current collector | Arithmetic mean roughness [µm] | Delamination strength [N] | Short-circuit resistance capacity [mAh/cm²] |
|---|---|---|---|---|
| Comparative Example 1 | Smooth Al foil | 0.21 | 5.4 | 4.0 |
| Example 1 | Roughened Al foil | 0.32 | 26.1 | 5.0 |
| Example 2 | Roughened Al foil | 0.46 | 64.8 | 7.0 |
| Example 3 | Roughened Al foil | 0.57 | 46.2 | 6.0 |

From the results shown in Table 1, the following was found. Specifically, in the positive electrode using a sulfur-based active material, when a roughened Al foil was used in place of a smooth Al foil as a positive electrode current collector, delamination strength between the positive electrode current collector and the positive electrode active material layer was increased. When a sulfur-based positive electrode using a roughened Al foil, a solid electrolyte layer, and a metallic Li negative electrode were combined to produce an all-solid lithium-sulfur battery, the short-circuit resistance capacity of the battery was increased as compared to using a smooth Al foil. The reason therefor was considered to be that roughening the surface of the positive electrode current collector increased the adhesive strength between the positive electrode current collector and the positive electrode active material layer due to anchor effect, whereby the positive electrode current collector and the positive electrode active material layer were less susceptible to delamination, even when the volume of the sulfur-based active material in the positive electrode active material layer changed due to charging and discharging, and cracking of the electrolyte layer associated with expansion of the positive electrode active material layer was suppressed or decreased. For reference, regarding Example 2, FIG. 2 shows a SEM image in which the interface between the positive electrode current collector and the positive electrode active material layer was observed. As shown in FIG. 2, in the positive electrode of Example 2, the positive electrode current collector and the positive electrode active material layer were found to be in close contact.

From the results shown in Table 1, when the surface of a positive electrode current collector was overly roughened, although the effects of improving delamination strength and short-circuit resistance capacity were obtained as compared to the case in which the surface of the positive electrode current collector was smooth, the effects were found to have decreased. If the surface of a positive electrode current collector is excessively roughened, other concerns may arise, such as a decrease in electronic conductivity in the thickness direction of the electrode, an increase in production cost of the positive electrode current collector, tip breakage due to decreased mechanical strength at the tips of the protruding portions on the surface of the positive electrode current collector, and an increase in minimum thickness due to decreased mechanical strength of the positive electrode current collector itself. From the viewpoint of avoiding such concerns, it can be said that an excessive increase in the surface roughness of the positive electrode current collector is unnecessary.

From the foregoing, it can be said that a battery comprising a positive electrode current collector, a positive electrode active material layer, an electrolyte layer, and a negative electrode and satisfying (1) to (3) below is less susceptible to delamination between the positive electrode current collector and the positive electrode active material layer, even when the volume of the sulfur-based positive electrode active material changes due to charging and discharging.
(1) The positive electrode active material layer comprises a sulfur-based active material.
(2) The positive electrode current collector has a contact surface in contact with the positive electrode active material layer.
(3) The arithmetic mean roughness of the contact surface is 0.25 µm or more.

In the above Examples, an aspect in which the positive electrode active material layer comprises a sulfur-based active material, a P-containing sulfide, and carbon was exemplified. However, the components of the positive electrode active material layer are not limited thereto. It is considered that as long as the positive electrode active material layer comprises a sulfur-based active material, the effect resulting from controlling the arithmetic mean roughness of the positive electrode current collector as described above can be obtained.

### REFERENCE SIGNS LIST

- 100: battery
- 10: positive electrode current collector
- 20: positive electrode active material layer
- 30: electrolyte layer
- 40: negative electrode
- 41: negative electrode current collector
- 42: negative electrode active material layer

## Claims

1. A battery, comprising a positive electrode current collector, a positive electrode active material layer, an electrolyte layer, and a negative electrode, wherein
the positive electrode active material layer comprises a sulfur-based active material,
the positive electrode current collector has a contact surface in contact with the positive electrode active material layer, and
arithmetic mean roughness of the contact surface is 0.25 µm or more.

2. The battery according to claim 1, wherein
the positive electrode current collector comprises Al.

3. The battery according to claim 1 or 2, wherein
the arithmetic mean roughness of the contact surface is 0.32 µm or more.

4. The battery according to any one of claims 1 to 3, wherein
the arithmetic mean roughness of the contact surface is 0.57 µm or less.

5. The battery according to any one of claims 1 to 4, wherein
the arithmetic mean roughness of the contact surface is more than 0.32 µm and less than 0.57 µm.

6. The battery according to any one of claims 1 to 5, wherein
the positive electrode active material layer comprises a P-containing sulfide and carbon.

7. The battery according to any one of claims 1 to 6, wherein
the electrolyte layer comprises a solid electrolyte.

8. The battery according to any one of claims 1 to 7, wherein
the negative electrode involves deposition of metallic lithium during charging, and involves dissolution of metallic lithium during discharging.
